# EUROPEAN PATENT SPECIFICATION

(11) **EP 2 004 705 B1**
(45) Date of publication and mention of the grant of the patent: **31.03.2010**
(21) Application number: 07728116.0
(22) Date of filing: 13.04.2007
(51) Int. Cl.: C08F 10/02, C08F 4/22, C08F 4/76, C08F 2/00

(54) **REDUCTION OF ELECTROSTATIC CHARGE IN A POLYMERISATION PROCESS**
VERRINGERUNG DER ELEKTROSTATISCHEN LADUNG BEI EINEM POLYMERISATIONSVERFAHREN
RÉDUCTION DE LA CHARGE ÉLECTROSTATIQUE DANS UN PROCÉDÉ DE POLYMÉRISATION

(30) Priority: 13.04.2006 EP 06112662
(43) Date of publication of application: 24.12.2008
(73) Proprietor: TOTAL PETROCHEMICALS RESEARCH FELUY, 7181 Seneffe (Feluy) (BE)
(72) Inventor: BODART, Philippe, 4480 Clermont sous Huy (BE); DEBRAS, Guy, 6210 Frasnes-les-Gosselies (BE); DAMS, Mieke, 2440 Geel (BE); BOUQUOYOUE, Yahya, 1410 Waterloo (BE)
(74) Representative: Leyder, Francis
(86) International application number: PCT/EP2007/053651
(87) International publication number: WO 2007/118865

(56) References cited:
- EP-A- 0 962 469
- EP-A1- 0 882 743
- WO-A-01/77191
- US-A- 4 041 224
- US-B1- 6 372 867

## Description

### FIELD OF THE INVENTION

The invention relates to a method for polymerising ethylene, or copolymerising ethylene and an alpha-olefinic comonomer comprising 3 to 10 carbon atoms, in a gas-phase polymerisation reactor.

### BACKGROUND AND OBJECTS OF THE INVENTION

Statism is a known problem in most polymerisation processes, more specifically in gas phase polymerisation processes, most particularly in fluidised bed gas phase processes. Indeed, the polymerisation of ethylene in a gas phase process often causes a generation of electrostatic charges that result in the accumulation of powder on the surface of the reactor, leading to sheeting or crust formation.

"Sheeting" is the formation of sheets of fused catalyst and resin particles adhering to the walls of the reactor. The sheets will eventually dislodge from the wall and, if the sheets are large enough, they can result in reactor plugging. "Drooling" occurs when sheets of molten polymer that are formed on the reactor walls flow along the walls of the reactor and accumulate at the base of the reactor. This can result in plugging of the distributor plate in the reactor and a loss of fluidisation.

The principal cause for electrostatic charge generation in the reactor is frictional contact of dissimilar materials by a physical process known as the triboelectric effect. Some additional causes for electrostatic charge generation are mentioned in the prior art, namely limited electrostatic dissipation, introduction to the process of minute quantities of prostatic agents, and excessive catalyst activities. In gas phase polymer production reactors, electrostatic charge is generated by frictional contact between the catalyst and polymer particles and the reactor walls. The frictional contact causes a flow of electrical charges from the walls of the grounded metal reactor to or from the polymer and catalyst particles in the fluidised bed. The charge flow can be measured by employing electrostatic probes. Typical charge flows (currents) are of magnitude of 0.1 to 10 microamperes per square meter of reactor surface area. Although these currents are very low, relatively high levels of electrical charge can accumulate over time in the reactor. This accumulation is enabled by the highly insulating characteristics of the polymer and catalyst particles.

The prior art describes some methods for the measurement of static electricity in polymerisation reactors as well as for its control, usually involving the injection into the system of a specific additive that will eliminate electrostatic charges or will result in the deactivation of fines.

For example, US 4,855,370 describes the use of water to avoid sheeting. WO 02/30993 describes a method for reducing electrostatic charges during polymerisation of olefin polymers, especially when using metallocene catalysts. The method consists of taking a sample of the polymer at the outlet of the reactor, measuring its electrostatic charge and adding an electrostatic control agent to the reactor. US 6,111,034 discloses the use of water as a electrostatic control agent in olefin polymerisation, and US 4,803,251 describes the use of alcohols, oxygen, nitric oxide and ketones.

US 4,184,979 describes the titanation of a catalyst by passing vapours of titanium compound through a fluidised bed. However, it does not address the problem of statism in a gas phase polymerisation reactor.

The problem relating to the prior art methods is the necessity to use additives that may for example cause harm in the final product or significantly modify the activity of the catalyst or the final resin properties. Such additives also require careful control of the injection rate to avoid disturbing the reaction.

An object of the present invention is thus to provide a method for preventing and/or reducing the formation of electrostatic charges in a gas phase reactor without the use of additives. Another object of the invention is to provide for a method that requires the feeding of essentially less or no additional material into the gas phase reactor in order to reduce electrostatic charges during the polymerisation.

### SUMMARY OF THE INVENTION

The inventors have found that one or more of these objects can be surprisingly attained by a method for polymerising ethylene, or copolymerising ethylene and an alpha-olefinic comonomer comprising 3 to 10 carbon atoms, comprising the steps of injecting an activated catalyst into a gas-phase polymerisation reactor, injecting ethylene and any optional alpha-olefinic comonomer into said reactor, allowing said ethylene and any optional comonomer to (co)polymerise and recovering a polyethylene powder, characterised in that the activated catalyst is produced by a process comprising the steps of
a) providing a support with a chromium compound deposited thereon;
b) dehydrating the product of step a);
c) titanating the product of step b) in an atmosphere of dry and inert gas containing at least one vaporised titanium alkoxide compound at a temperature of at least 250°C, and
d) activating the product of step c) at a temperature of at least 500°C.

The present invention also provides for a use, in a gas-phase polymerisation of ethylene, of an activated chromium-based catalyst obtainable by a process comprising the steps of
a) providing a support with a chromium compound deposited thereon;
b) dehydrating the product of step a);
c) titanating the product of step b) in an atmosphere of dry and inert gas containing at least one vaporised titanium alkoxide compound at a temperature of at least 250°C, and
d) activating the titanated chromium-based catalyst of step c) at a temperature of at least 500°C.

### BRIEF DESCRIPTION OF THE DRAWING

Figure 1 shows an electrostatic voltage trace as a function of time for Example 1.
Figure 2 shows an electrostatic voltage trace as a function of time for Comparative example 1.
Figure 3 shows an electrostatic voltage trace as a function of time for Comparative example 2.

### DETAILED DESCRIPTION OF THE INVENTION

The present invention provides a method for polymerising ethylene, or copolymerising ethylene and an alpha-olefinic comonomer comprising 3 to 10 carbon atoms, comprising the steps of injecting an activated catalyst into a gas-phase polymerisation reactor, injecting ethylene and any optional alpha-olefinic comonomer into said reactor, allowing said ethylene and any optional comonomer to (co)polymerise and recovering a polyethylene powder, characterised in that the activated catalyst is manufactured by a process comprising the steps of
a) providing a support with a chromium compound deposited thereon;
b) dehydrating the product of step a);
c) titanating the product of step b) in an atmosphere of dry and inert gas containing at least one vaporised titanium alkoxide compound at a temperature of at least 250°C, and
d) activating the product of step c) at a temperature of at least 500°C.

The present invention thus provides for a method that allows at least partial removal of the statism problem by using a specific chromium type catalyst, thus permitting to avoid completely or to reduce the use of specific additives for the reduction of electrostatic charges.

By "polymerisation of ethylene" in this description it is meant both homopolymerisation of ethylene and copolymerisation of ethylene with an alpha-olefinic comonomer comprising 3 to 10 carbon atoms, although this might not always be expressly mentioned. Preferably, the alpha-olefinic comonomer is selected from the group consisting of 1-butene, 1-hexene and 1-octene, 1-hexene being most preferred.

The support preferably comprises silicon and more preferably is a silica-based support. It may also be based on a group Illa/IVa/Va oxide. The support thus preferably comprises a silicon oxide such as silicon dioxide and it may also comprise titanium, aluminium and/or phosphorus oxide. Silica-based supports comprise at least 50% by weight of amorphous silica. Preferably the support is a silica support or a silica alumina support. In the case of silica alumina supports, the support comprises at most 15% by weight of alumina.

Some suitable supports that can be used in this invention are silica-based supports that consist of amorphous silica having a surface area of at least 250 m²/g, preferably of at least 280 m²/g, and less than 600 m²/g, preferably less than 380 m²/g and more preferably less than 350 m²/g. The specific surface area is measured by N₂ adsorption using the well-known BET technique. The support typically has a pore volume of 1 cm³/g to 3 cm³/g.

Supports with a pore volume of 1.3 - 2.0 cm³/g are preferred. Pore volume is measured by N₂ desorption using the BJH method for pores with a diameter of less than 1000A. Supports with too small porosity result in a loss of melt index potential and in lower activity. Supports with pore volume of over 2.5 cm³/g, or even with pore volume of over 2.0 cm³/g are less desirable because they require special expensive preparation steps (e.g. azeotropic drying) during their synthesis or their subsequent modification with chromium compounds. In addition, because they are usually more sensitive to attrition during handling, activation or use of the catalyst in polymerisation, these supports often lead to the production of more polymer fines, which is detrimental in an industrial process.

The support can be prepared by various known techniques such as but not limited to gelification, precipitation and/or spray-drying. Usually, particle size D50 is from 20 µm, preferably from 30 µm and more preferably from 35 µm, up to 150 µm, preferably up to 100 µm and most preferably up to 70 µm. D50 is defined as the particle diameter, with 50 wt-% of particles having a smaller diameter and 50 wt-% of particles having a larger diameter. Particle size D90 is up to 200 µm, preferably up to 150 µm, most preferably up to 110 µm. D90 is defined as a particle diameter, with 90 wt-% of particles having a smaller diameter and 10 wt-% of particles having a larger diameter. Particle size D10 is at least 5 µm, preferably at least 10 µm. D10 is defined as a particle diameter, with 10 wt-% of particles having a smaller diameter and 90 wt-% of particles having a larger diameter. Particle size distribution is determined using light diffraction granulometry, for example, the Malvern Mastersizer 2000. The particle morphology is preferably microspheroidal to favour fluidisation and to reduce attrition.

The support can be dried by heating with an inert gas prior to use thereof in the catalyst synthesis, in the manner known to those skilled in the art, e.g. at about 200°C for from 8 to 16 hours under nitrogen or other suitable, preferably inert gas.

Known chromium-containing compounds capable of reacting with the surface hydroxyl groups of the silica-based supports can be used for the deposition of chromium on said support. Examples of such compounds include chromium nitrate, chromium(III)acetate, chromium(III)acetylacetonate, chromium trioxide, chromate esters such as t-butyl chromate, silyl chromate esters and phosphorous-containing esters, and mixtures thereof. Preferably, chromium acetate, chromium acetylacetonate or chromium trioxide is used.

The chromium content of the chromium-based catalyst can be of from 0.1 wt-%, preferably from 0.2 wt-%, up to 1.0 wt-%, preferably up to 0.6 wt-% of chromium, based on the weight of the titanated chromium-based catalyst.

The chromium-based catalyst can be prepared by dry mixing or non-aqueous impregnation but is preferably prepared by impregnation of the support with an aqueous solution of a soluble chromium compound such as chromium acetate, chromium acetylacetonate or CrO₃.

The supported chromium-based catalyst is subjected, in step b), to a pretreatment in order to dehydrate it and drive off physically adsorbed water from the support. The removal of physically adsorbed water helps to avoid the formation of crystalline TiO₂ as a product from the reaction of water with the titanium compound subsequently introduced during the titanation procedure, as described below. The dehydration step is carried out by heating the catalyst to a temperature of at least 250°C and preferably of at least 270°C, preferably in a fluidised bed, and in a dry and inert gas, preferably nitrogen. The dehydration step is usually carried out for 0.5 to 2 hours.

In step c), the supported chromium-based catalyst is loaded with one or more titanium alkoxide compounds. The titanium alkoxide compound may be of the formula RₙTi(OR')ₘ, (RO)ₙTi(OR')ₘ and mixtures thereof, wherein R and R' are the same or different hydrocarbyl groups containing 1 to 12 carbon atoms, and wherein m is 1, 2, 3 or 4 and m+n equals 4. Preferably, the titanium compounds are titanium tetraalkoxides Ti(OR')₄ wherein each R' is the same or different alkyl or cycloalkyl group each having 3 to 5 carbon atoms. Also mixtures of various titanium alkoxides can be used. The titanation is preferably performed by progressively introducing the titanium compound into a stream of a dry and inert gas as described here above in the dehydration step, preferably in a non-oxidizing gas. Preferably, the titanation step is carried out in a fluidised bed. In the titanation step, an elevated temperature is maintained so that titanium compound is present in its vaporised form at at least 250°C, and preferably at at least 270°C, more preferably from 270°C to 350°C. The titanium compound can be pumped as a liquid into the reaction zone where it vaporizes.

This titanation step can be controlled so that the final concentration of deposited titanium on the treated catalyst is from 1.0 wt-%, preferably from 2.0 wt-%, up to 5.0 wt-%, preferably up to 4.0 wt-%, based on the weight of the titanated chromium-based catalyst. A person skilled in the art is readily able to calculate the total amount of titanium compound to be introduced into the gas stream in order to obtain the required titanium content in the resultant catalyst and the progressive flow rate of the titanium can be accordingly adjusted in order to provide a titanation reaction period of 0.5 to 2 hours.

After the introduction of the titanium compound, the catalyst can be flushed under the gas stream for a period of typically 0.75 to 2 hours.

The titanated catalyst is then subjected to an activation step, preferably in an oxidising gas, such as dry air, at an elevated activation temperature for at least 2 hours, preferably at least 4 hours and most preferably at least 6 hours. The atmosphere is typically changed from nitrogen (inert gas) to air (oxidising gas), and the temperature can be progressively increased, from the titanation step to the activation step. According to an embodiment of the invention, the activation of the titanated chromium-based catalyst of step d) is carried out at a temperature of from 500 to 750°C. The activation temperature thus typically is from 500°C, preferably from 525°C, up to 850°C, preferably up to 750°C, more preferably up to 700°C or even more preferably up to 650°C.

The ethylene polymerisation or copolymerisation process of the present invention is carried out in the gas phase. The gas phase polymerisation can be performed in one or more fluidised bed or agitated bed reactors. The gas phase typically comprises ethylene, if required an alpha-olefinic comonomer comprising 3 to 10 carbon atoms, such as 1-butene, 1-hexene, 4-methyl-1-pentene, 1-octene or mixtures thereof, as well as an inert gas such as nitrogen. Optionally a metal alkyl can also be injected in the polymerisation medium as well as one or more other reaction controlling agents, for example, hydrogen. It is however possible to use specific additives, such as acetone and/or fatty acid compounds, for the reduction of electrostatic charges in amounts that are considerably lower than those used in the prior art methods, or it is not necessary to use this kind of additive at all.

The reactor temperature is typically adjusted to a temperature of from 80, 85, 90, or 95°C up to 100, 110, 112 or 115°C, more preferably between 90 and 112°C and even more preferably between 95 and 112°C. Optionally a hydrocarbon diluent such as pentane, isopentane, hexane, isohexane, cyclohexane or a mixture thereof can be used if the gas phase unit is run in a so-called condensing or super-condensing mode.

The electrostatic charges in a reactor can be measured with at least one electrostatic voltmeter, by measuring the voltage on e.g. a 13 mm (1/2 inch) spherical electrode located in the fluid at approximately 25 mm (1 inch) radially from the reactor wall, and at a height above the gas distributor plate. Such measurement is also disclosed in US 4,855,370 (see in particular Example 1).

The present invention also provides for a use, in a gas-phase polymerisation of ethylene or a copolymerisation of ethylene and an alpha-olefinic comonomer, of an activated chromium-based catalyst obtainable by a process comprising the steps of:
a) providing a support with a chromium compound deposited thereon;
b) dehydrating the product of step a);
c) titanating the product of step b) in an atmosphere of dry and inert gas containing at least one vaporised titanium alkoxide compound at a temperature of at least 250°C, and
d) activating the product of step c) at a temperature of at least 500°C.

The details and embodiments described above in connection with the method also apply to the use according to the present invention. Preferably, the gas phase polymerisation is carried out in a fluidised bed gas phase reactor.

The present invention further relates to polyethylene homo- and copolymers obtainable by the process described above. The polyethylene homo- and copolymers are typically medium and high density polyethylenes. The densities of the resins are typically at least 0.918, preferably at least 0.930 g/cm³, more preferably at least 0.934 g/cm³.

The details and embodiments described above in connection with the method and use also apply to the polyethylene according to the present invention.

The following Examples are given to illustrate the invention without limiting its scope.

### EXPERIMENTAL PART

Four examples and two comparative examples were carried out in an industrial scale gas phase polymerisation reactor with ethylene, in order to demonstrate the invention. All polymerisation runs were performed with the same reactor equipment.

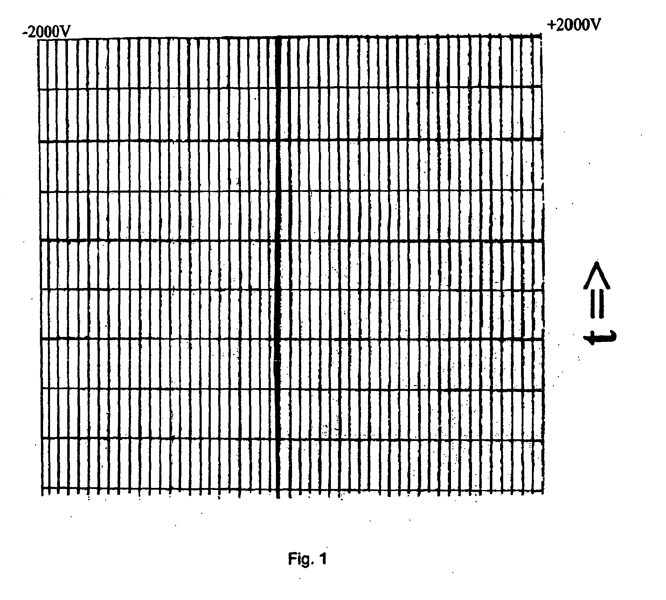

Electrostatic charge accumulation was determined by the measurement of the bed voltage. The bed voltage was measured by an electrostatic voltmeter connected to a spherical diameter electrode located in the bed. Such a device is described in more detail in US 4,855,370, Example 1. The results are shown in Figures 1 to 3. The trace at approximately 0 V represents the electrostatic charge of the reactor.

The polyethylenes obtained were characterised by their densities measured according to the standard ASTM D 1505-85, given in g/cm³ and their melt indexes. The melt index HLMI was measured according to the standard ASTM D 1238 at 190°C under a load of 21.6 kg and the melt index MI2 was measured according to the standard ASTM D 1238 at 190°C under a load of 2.16 kg, the results are given in g/10 min.

### Example 1

The starting material was chromium deposited on a spheroidal silica support. The starting material had the following properties: Cr-content = 0.56 wt-%, BET specific surface area (from N2 adsorption) = 301 m²/g, BJH pore volume (from N2 desorption) = 1.53 ml/g, ratio surface area/Cr 53750 m²/g Cr, D50 = 46 µm, D1 = 13 µm, D90 = 88 µm, Fines content (d < 31 µm) was about 25 wt%. Particle size distributions are measured using light diffraction granulometry Malvern Mastersizer 2000.

The starting catalyst had been prepared in an industrial fluidised bed activator according to the following procedure:
- about 200 kg of the starting solid was introduced in a fluidised bed activator;
- the starting solid was heated up to 270°C in 3 hours under nitrogen and maintained at this temperature for about 2 hours;
- about 41 - 45 kg of titanium tetra isopropoxide (available under the trade name TYZOR® TPT) were progressively injected in the fluidised bed (over 2 hours whilst maintaining the temperature at 270°C so that titanium compound vaporised);
- the obtained titanated catalyst was further maintained at 270°C under nitrogen flow for 2 hours;
- nitrogen was replaced by air and the titanated catalyst was heated up to 550°C and maintained at 550°C for 6 hours;
- the activated catalyst was cooled down to 360°C under air and then to room temperature under nitrogen;
- the activated catalyst was unloaded under nitrogen and kept under inert gas until use in polymerisation.

The activated catalyst was used for a gas phase polymerisation of ethylene to produce a PE resin. The reaction conditions are given in Table 1. 1-hexene was used as a comonomer to regulate the polymer density. The melt index was controlled through temperature control, and also through the introduction of hydrogen as known by a person skilled in the art. A resin was obtained which had a density of 0.955 g/cm³ and high load melt index (HLMI) of 18.4 g/10 min. Figure 1 shows the electrostatic voltage trace as a function of time for Example 1. The voltage trace in this Figure is flat with nearly no variation of the electric potential. This is characteristic of a system without electrostatic problems.

### Example 2

The activated catalyst prepared in Example 1 was used for another gas phase polymerisation of ethylene to produce a PE resin. The reaction conditions are given in Table 1. 1-hexene was used as a comonomer to regulate the polymer density. A resin was obtained which had a density of 0.952 g/cm³ and high load melt index (HLMI) of 8.3 g/10 min. The voltage trace was identical to that of Example 1.

### Example 3

An activated catalyst was prepared as in Example 1 with the exception that the activation was performed at temperature of 650°C instead of 550°C. The activated catalyst was used for another gas phase polymerisation of ethylene to produce a PE resin. The reaction conditions are given in Table 1. 1-hexene was used as a comonomer to regulate the polymer density. A resin was obtained which had a density of 0.944 g/cm³ and high load melt index (HLMI) of 16.0 g/10 min. The voltage trace was identical to that of Example 1.

### Example 4

An activated catalyst was prepared as in Example 1 with the exception that the activation was performed at a temperature of 750°C instead of 550°C. The activated catalyst was used for another gas phase polymerisation of ethylene to produce a PE resin. The reaction conditions are given in Table 1. 1-hexene was used as a comonomer to regulate the polymer density. A resin was obtained which had a density of 0.946 g/cm³ and high load melt index (HLMI) of 21.1 g/10 min. The voltage trace was identical to that of Example 1.

**Table 1**

| **EXAMPLE** | Example 1 | Example 2 | Example 3 | Example 4 |
|---|---|---|---|---|
| **Polymerisation conditions** | | | | |
| temperature (°C) | 112 | 108.5 | 103 | 106 |
| C6/C2 in gas flow (%) | 0.043 | 0.14 | 0.78 | 0.13 |
| H2/C2 in gas flow (%) | 0.2 | 0.05 | 0.03 | 0.03 |

| **Polyethylene properties** | | | | |
|---|---|---|---|---|
| HLMI (dg/min) | 18.4 | 8.3 | 16.0 | 28.5 |
| Density (g/cm³) | 0.955 | 0.952 | 0.944 | 0.953 |

### Comparative example 1

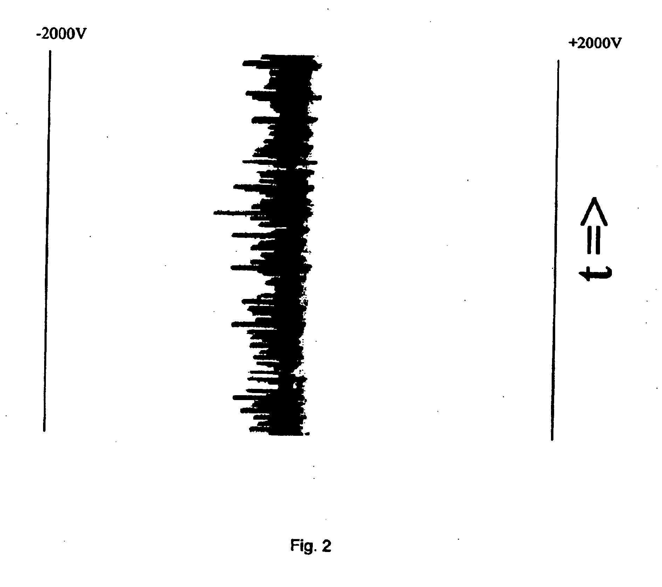

A production run was carried out using catalyst X, as described in US 3,324,101. The target resin produced using this catalyst was a HDPE with density d=0.945 g/cm³ and HLMI=11.5 g/10 min. Figure 2 shows the electrostatic voltage trace as a function of time. As can be seen, the use of catalyst X results in a variation of voltage linked to static electricity charge/discharge.

### Comparative example 2

A production run was carried out using catalyst Y as described in US 6,982,304 (Catalyst 1 of the examples). Catalyst Y was a Ti-containing catalyst prepared by impregnation of a silica support with a Cr-compound and with a titanium compound and further activated in a fluidised bed under air at high temperature.

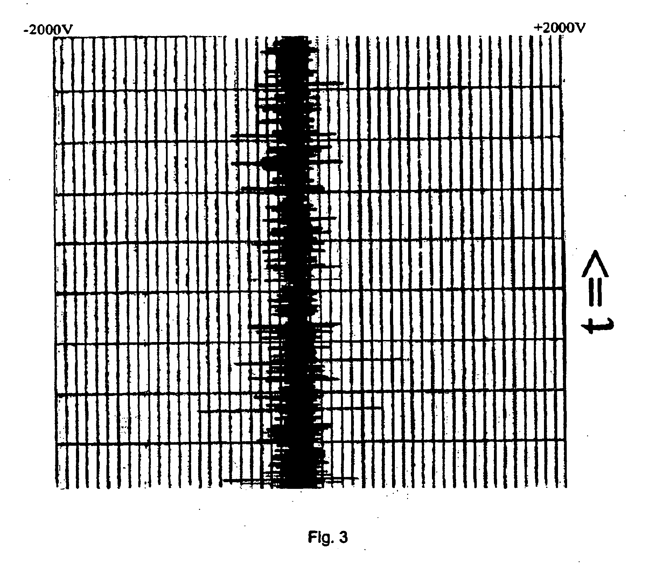

The target resin produced using this catalyst was a HDPE with density d=0.951 g/cm³, HLMI=24 g/10 min and MI2=0.23 g/10 min. Figure 3 shows the electrostatic voltage trace as a function of time. It shows also variation of voltage linked to static electricity charge/discharge.

The polymerisation unit was first run with catalyst Y according to the Comparative example 2. Catalyst Y was replaced with the catalyst according to Example 1 by introducing it into the unit. The catalyst according to Example 1 was used to produce a set of PE resins. It was then replaced back to catalyst Y. At that time, the trace went back from that shown in Figure 1 to the one depicted in Figure 3. This clearly shows that the invention enables to conduct gas phase polymerisation without problems associated with statism and sheeting.

## Claims

1. A method for polymerising ethylene, or copolymerising ethylene and an alpha-olefinic comonomer comprising 3 to 10 carbon atoms, comprising the steps of injecting an activated catalyst into a gas-phase polymerisation reactor, injecting ethylene and any optional alpha-olefinic comonomer into said reactor, allowing said ethylene and any optional comonomer to (co)polymerise and recovering a polyethylene powder, **characterised in that** the activated catalyst is manufactured by a process comprising the steps of:
a) providing a support with a chromium compound deposited thereon;
b) dehydrating the product of step a);
c) titanating the product of step b) in an atmosphere of dry and inert gas containing at least one vaporised titanium alkoxide compound at a temperature of at least 250°C; and
d) activating the product of step c) at a temperature of at least 500°C.

2. A method according to claim 1, **characterised in that** the support is a silica-based support.

3. A method according to claim 2, **characterised in that** the support is a silica support.

4. A method according to any one of the foregoing claims wherein step b) is carried out at a temperature of at least 250°C in an atmosphere of dry and inert gas.

5. A method according to any one of the foregoing claims wherein step c) is carried out at a temperature of at least 270°C.

6. A method according to any of the foregoing claims wherein the activation of the titanated chromium-based catalyst of step d) is carried out at a temperature of from 500 to 850°C in an oxidising atmosphere.

7. A method according to any of the foregoing claims wherein the activation of the titanated chromium-based catalyst of step d) is carried out at a temperature of from 525 to 750°C in an oxidising atmosphere.

8. A method according to any one of claims 2 to 7, **characterised in that** the support has a specific surface area of at least 250 m²/g and of less than 600m²/g.

9. A method according to any one of the foregoing claims, **characterised in that** chromium concentration is at least 0.1 wt-% and at most 1.0 wt-%, based on the weight of the titanated chromium-based catalyst.

10. A method according to any one of the foregoing claims, **characterised in that** the at least one titanium alkoxide compound is selected from RₙTi(OR')ₘ, (RO)ₙTi(OR')ₘ and mixtures thereof, wherein R and R' are the same or different hydrocarbyl groups containing from 1 to 12 carbon atoms, and wherein n is 0 to 3, m is 1 to 4 and m+n equals 4.

11. A method according to claim 10, **characterised in that** the at least one titanium alkoxide compound is selected from the group consisting of tetraalkoxides of titanium having the general formula Ti(OR')₄ wherein each R' is the same or different and can be an alkyl or cycloalkyl group each having from 3 to 5 carbon atoms, and mixtures thereof.

12. A method according to any of the foregoing claims, **characterised in that** the concentration of deposited titanium is from 1.0 wt-% up to 5.0 wt-% based on the weight of the titanated chromium-based catalyst.

13. Use of a chromium-based catalyst, in a gas-phase polymerisation of ethylene, obtainable by a process comprising the steps of
a) providing a support with a chromium compound deposited thereon;
b) dehydrating the product of step a);
c) titanating the product of step b) in an atmosphere of dry and inert gas containing at least one vaporised titanium alkoxide compound at a temperature of at least 250°C, and
d) activating the titanated chromium-based catalyst of step c) at a temperature of at least 500°C.

14. Use according to claim 13, **characterised in that** the polymerisation is a homopolymerisation of ethylene or a copolymerisation of ethylene and an alpha-olefinic comonomer comprising 3 to 10 carbon atoms.

15. Use according to claim 13 or 14, **characterised in that** the gas-phase polymerisation is carried out in a fluidised bed gas-phase polymerisation reactor.

## Patentansprüche

1. Verfahren zum Polymerisieren von Ethylen oder Copolymerisieren von Ethylen und eines alpha-olefinischen Comonomers mit 3 bis 10 Kohlenstoffatomen, umfassend die folgenden Schritte: Injizieren eines aktivierten Katalysators in einen Gasphasenpolymerisationsreaktor, Injizieren von Ethylen und eines optionalen alpha-olefinischen Comonomers in den Reaktor, (Co)polymerisierenlassen des Ethylens und eines optionalen Comonomers und Gewinnen eines Polyethylenpulvers, **dadurch gekennzeichnet, dass** der aktivierte Katalysator durch einen Prozess hergestellt wird, der die folgenden Schritte umfasst:
a) Bereitstellen eines Trägers mit einer darauf abgeschiedenen Chromverbindung;
b) Dehydratisieren des Produkts von Schritt a);
c) Titanieren des Produkts von Schritt b) in einer Atmosphäre von trockenem und inertem Gas, das wenigstens eine verdampfte Titanalkoxidverbindung enthält, bei einer Temperatur von mindestens 250°C; und
d) Aktivieren des Produkts von Schritt c) bei einer Temperatur von mindestens 500 °C.

2. Verfahren nach Anspruch 1, **dadurch gekennzeichnet, dass** es sich bei dem Träger um einen siliciumdioxidbasierten Träger handelt.

3. Verfahren nach Anspruch 2, **dadurch gekennzeichnet, dass** es sich bei dem Träger um einen Siliciumoxidträger handelt.

4. Verfahren nach einem der vorhergehenden Ansprüche, wobei Schritt b) bei einer Temperatur von mindestens 250 °C in einer Atmosphäre von trockenem und inertem Gas ausgeführt wird.

5. Verfahren nach einem der vorhergehenden Ansprüche, wobei Schritt c) bei einer Temperatur von mindestens 270 °C ausgeführt wird.

6. Verfahren nach einem der vorhergehenden Ansprüche, wobei die Aktivierung des titanierten chrombasierten Katalysators von Schritt d) bei einer Temperatur von 500 bis 800 °C in einer oxidierenden Atmosphäre ausgeführt wird.

7. Verfahren nach einem der vorhergehenden Ansprüche, wobei die Aktivierung des titanierten chrombasierten Katalysators von Schritt d) bei einer Temperatur von 525 bis 750 °C in einer oxidierenden Atmosphäre ausgeführt wird.

8. Verfahren nach einem der Ansprüche 2 bis 7, **dadurch gekennzeichnet, dass** der Träger eine spezifische Oberfläche von mindestens 250 m²/g und weniger als 600 m²/g aufweist.

9. Verfahren nach einem der vorhergehenden Ansprüche, **dadurch gekennzeichnet, dass** die Chromkonzentration mindestens 0,1 Gew.-% und höchstens 1,0 Gew.-%, bezogen auf das Gewicht des titanierten chrombasierten Katalysators, beträgt.

10. Verfahren nach einem der vorhergehenden Ansprüche, **dadurch gekennzeichnet, dass** die wenigstens eine Titanalkoxidverbindung aus RₙTi(OR')ₘ, (RO)ₙTi(OR')ₘ und Mischungen davon ausgewählt ist, wobei R und R' für dieselben oder verschiedene Hydrocarbylgruppen mit 1 bis 12 Kohlenstoffatomen stehen, und wobei n 0 bis 3 ist, m 1 bis 4 ist und m+n gleich 4 ist.

11. Verfahren nach Anspruch 10, **dadurch gekennzeichnet, dass** die wenigstens eine Titanalkoxidverbindung aus der Gruppe bestehend aus Tetraalkoxiden von Titan mit der allgemeinen Formel Ti(OR')₄, wobei jede R' gleich oder verschieden ist und für eine Alkyl- oder Cycloalkylgruppe stehen kann, die jeweils 3 bis 5 Kohlenstoffatome aufweisen, und Mischungen davon ausgewählt ist.

12. Verfahren nach einem der vorhergehenden Ansprüche, **dadurch gekennzeichnet, dass** die Konzentration von abgeschiedenem Titan 1,0 Gew.-% bis 5,0 Gew.-%, bezogen auf das Gewicht des titanierten chrombasierten Katalysators, beträgt.

13. Verwendung eines chrombasierten Katalysators bei einer Gasphasenpolymerisation von Ethylen, erhältlich durch einen Prozess, der die folgenden Schritte umfasst:
a) Bereitstellen eines Trägers mit einer darauf abgeschiedenen Chromverbindung;
b) Dehydratisieren des Produkts von Schritt a);
c) Titanieren des Produkts von Schritt b) in einer Atmosphäre von trockenem und inertem Gas, das wenigstens eine verdampfte Titanalkoxidverbindung enthält, bei einer Temperatur von mindestens 250 °C; und
d) Aktivieren des titanierten chrombasierten Katalysators von Schritt c) bei einer Temperatur von mindestens 500 °C.

14. Verwendung nach Anspruch 13, **dadurch gekennzeichnet, dass** es sich bei der Polymerisation um eine Homopolymerisation von Ethylen oder eine Copolymerisation von Ethylen und eines alpha-olefinischen Comonomers mit 3 bis 10 Kohlenstoffatomen handelt.

15. Verwendung nach Anspruch 13 oder 14, **dadurch gekennzeichnet, dass** die Gasphasenpolymerisation in einem Gasphasenpolymerisations-Wirbelbettreaktor mit fluidisiertem Bett ausgeführt wird.

## Revendications

1. Procédé de polymérisation d'éthylène, ou de copolymérisation d'éthylène et d'un comonomère alpha-oléfinique comprenant 3 à 10 atomes de carbone, comprenant les étapes consistant à injecter un catalyseur activé dans un réacteur de polymérisation en phase gazeuse, injecter de l'éthylène et un comonomère alpha-oléfinique facultatif quelconque dans ledit réacteur, laisser lesdits éthylène et comonomère facultatif quelconque se (co)polymériser et récupérer une poudre de poly(éthylène), **caractérisé en ce que** le catalyseur activé est fabriqué par un procédé comprenant les étapes consistant à :
a) fournir un support sur lequel est déposé un composé de chrome ;
b) déshydrater le produit de l'étape a) ;
c) titaner le produit de l'étape b) dans une atmosphère de gaz sec et inerte contenant au moins un composé alcoxyde de titane vaporisé à une température d'au moins 250°C ; et
d) activer le produit de l'étape c) à la température d'au moins 500 °C.

2. Procédé selon la revendication 1, **caractérisé en ce que** le support est un support à base de silice.

3. Procédé selon la revendication 2, **caractérisé en ce que** le support est un support à base de silice.

4. Procédé selon l'une quelconque des revendications précédentes, dans lequel l'étape b) est réalisée à une température d'au moins 250 °C dans une atmosphère de gaz sec et inerte.

5. Procédé selon l'une quelconque des revendications précédentes, dans lequel l'étape c) est réalisée à une température d'au moins 270 °C.

6. Procédé selon l'une quelconque des revendications précédentes, dans lequel l'activation du catalyseur à base de chrome titane de l'étape d) est réalisée à une température de 500 à 850 °C dans une atmosphère oxydante.

7. Procédé selon l'une quelconque des revendications précédentes, dans lequel l'activation du catalyseur à base de chrome titane de l'étape d) est réalisée à une température de 525 à 750 °C dans une atmosphère oxydante.

8. Procédé selon l'une quelconque des revendications 2 à 7, **caractérisé en ce que** le support a une surface spécifique d'au moins 250 m²/g et inférieure à 600 m²/g.

9. Procédé selon l'une quelconque des revendications précédentes, **caractérisé en ce que** la concentration en chrome est d'au moins 0,1 % en poids et d'au plus 1,0 % en poids, sur la base du poids du catalyseur à base de chrome titané.

10. Procédé selon l'une quelconque des revendications précédentes, **caractérisé en ce que** le au moins un composé alcoxyde de titane est choisi parmi RₙTi(OR')ₘ, (RO)ₙTi(OR')ₘ et leurs mélanges, où R et R' sont des groupes hydrocarbyle identiques ou différents contenant de 1 à 12 atomes de carbone, et où n vaut 0 à 3, m vaut 1 à 4 et m + n est égal à 4.

11. Procédé selon la revendication 10, **caractérisé en ce que** le au moins un composé alcoxyde de titane est choisi dans le groupe consistant en les tétraalcoxydes de titane de formule générale Ti(OR')₄ où les R' sont identiques ou différents et peuvent être un groupe alkyle ou cycloalkyle ayant chacun de 3 à 5 atomes de carbone, et leurs mélanges.

12. Procédé selon l'une quelconque des revendications précédentes, **caractérisé en ce que** la concentration de titane déposé va de 1,0 % en poids à 5,0 % en poids sur la base du poids du catalyseur à base de chrome titané.

13. Utilisation d'un catalyseur à base de chrome, dans une polymérisation d'éthylène en phase gazeuse, pouvant être obtenu par un procédé comprenant les étapes consistant à :
a) fournir un support sur lequel est déposé un composé de chrome ;
b) déshydrater le produit de l'étape a) ;
c) titaner le produit de l'étape b) dans une atmosphère de gaz sec et inerte contenant au moins un composé alcoxyde de titane vaporisé à une température d'au moins 250 °C ; et
d) activer le catalyseur à base de chrome titane de l'étape c) à une température d'au moins 500 °C.

14. Utilisation selon la revendication 13, **caractérisée en ce que** la polymérisation est une homopolymérisation d'éthylène ou une copolymérisation d'éthylène et d'un comonomère alpha-oléfinique comprenant 3 à 10 atomes de carbone.

15. Utilisation selon la revendication 13 ou 14, **caractérisée en ce que** la polymérisation en phase gazeuse est réalisée dans un réacteur de polymérisation en phase gazeuse à lit fluidisé.
